# FASCICULE DE BREVET EUROPEEN

(11) **EP 1 439 316 B1**
(45) Date de publication et mention de la délivrance du brevet: **21.06.2006**
(21) Numéro de dépôt: 04100113.2
(22) Date de dépôt: 15.01.2004
(51) Int. Cl.: F16B 41/00, F16B 31/02

(54) **Dispositif de retenue pour organe de liaison, et système découpleur equipé d'un tel dispositif**
Halter für ein Verbindungsorgan und diesem enthaltendes Entkupplungssystem
Retainer for a connecting member and uncoupling system comprising such a retainer

(30) Priorité: 17.01.2003 FR 0300477
(43) Date de publication de la demande: 21.07.2004
(73) Titulaire: SNECMA, 75015 Paris (FR)
(72) Inventeur: Lejeune, Pascal, 77210 Samoreau (FR)
(74) Mandataire: Poulin, Gérard

(56) Documents cités:
- FR-A- 2 752 024
- US-A- 3 408 890
- US-B1- 6 280 131

## Description

### DOMAINE TECHNIQUE

La présente invention se rapporte à un système d'assemblage mécanique de pièces.

Elle vise un dispositif de retenue d'une portion d'organe de liaison qui est libérée après rupture dudit organe de liaison.

L'organe de liaison peut être par exemple un boulon, assurant l'assemblage des pièces.

Le dispositif de retenue de l'invention est particulièrement adapté lorsque la rupture de l'organe de liaison est provoquée volontairement, comme par exemple dans le cas d'un système découpleur.

On rappelle qu'un système découpleur est un système d'assemblage de pièces, apte à assurer le découplage desdites pièces lorsque la charge appliquée atteint ou dépasse une valeur de charge prédéterminée. Un système découpleur est constitué d'organes de liaison, par exemple des boulons. Le découplage est provoqué par la rupture des organes de liaison.

La présente invention vise également un système découpleur équipé d'un dispositif de retenue conforme à l'invention.

### ETAT DE LA TECHNIQUE ANTERIEURE

Un système découpleur à vis en traction est mis en oeuvre dans le document FR 2 752 024.

Ce document décrit un support de palier qui maintient un roulement. Le support de palier est fixé à un carter par une bride associée à un ensemble de vis d'assemblage toutes parallèles à l'axe de l'arbre moteur.

Lorsque le support de palier est soumis à une charge importante, par exemple due à un balourd consécutif à la rupture d'une aube, ladite charge est empêchée d'être transmise au carter puis au reste de la structure grâce à la présence d'un système découpleur disposé entre ledit support de palier et ledit carter.

Le système découpleur comprend des vis d'assemblage disposées entre le support de palier et le carter.

Lorsqu'un balourd se produit, il soumet l'arbre à un effort radial cyclique, qui est converti, de par la géométrie et le dimensionnement du support de palier, en un effort axial cyclique qui agit en traction sur les vis d'assemblage. Celles-ci se rompent lorsque la charge qui leur est appliquée atteint ou dépasse une valeur de charge prédéterminée.

Le système découpleur de l'art antérieur qui vient d'être décrit présente un inconvénient majeur, lorsque les vis d'assemblage se rompent. En effet, les têtes de vis et les extrémités libres des têtes de vis ne sont plus maintenues ensemble, et sont susceptibles d'être projetées dans l'environnement du système découpleur. Il en résulte un risque important de détérioration, voire de destruction de cet environnement.

Le document US-A-6 280 131 divulgue un dispositif de retenue apte à retenir une portion d'un organe de liaison de pièces, ladite portion étant libérée lors de la rupture dudit organe de liaison. Le dispositif de retenue comprend (les références numériques ci-dessous sont celles qui apparaissent sur la figure 3 de ce document) :
- une partie fixe (50),
- une partie mobile (30) apte à coulisser par rapport à la partie fixe (50),
- un logement, défini à l'intérieur de la partie fixe (50) et de la partie mobile (30),
- un moyen de rappel (40), comprimé lors de l'opération d'assemblage des pièces (60, 62).

L'organe de liaison (20) est une vis.

Ce document ne mentionne pas une possible rupture de la vis. Cependant, si la vis venait à se rompre, le moyen de rappel serait détendu, ce qui provoquerait le coulissement de la partie mobile par rapport à la partie fixe, de telle manière que la portion rompue de la vis se trouverait retenue dans le logement.

### EXPOSE DE L'INVENTION

Le but de la présente invention est de remédier à l'inconvénient ci-dessus mentionné.

L'invention fournit un dispositif de retenue, apte à équiper un système découpleur, qui permet de retenir des portions de boulons, ou autres organes de liaison, qui sont susceptibles d'être projetées dans l'environnement du système découpleur lorsque le découplage se produit.

Selon l'invention, le dispositif de retenue destiné , dans un assemblage de pieces au moyen d'un organe de liaison, à retenir une portion de l'organe de liaison de pièces, ladite portion d'organe de liaison étant libérée lors de la rupture dudit organe de liaison, comprenant destinée à être fixée sur une des pièces assemblées, du côté où est libérée la portion de l'organe de liaison
- une partie fixe, destinée à être fixée sur une des pièces assemblées, du côté où est libérée la portion de l'organe de liaison
- une partie mobile apte à coulisser par rapport à la partie fixe,
- un logement, pour ladite portion de l'organe de liaison défini à l'intérieur de la partie fixe et de la partie mobile,
- un moyen de rappel, comprimé lors de l'opération d'assemblage des pièces,
le moyen de rappel étant détendu lors de la rupture de l'organe de liaison, ce qui provoque le coulissement de la partie mobile par rapport à la partie fixe, de telle manière que ladite portion d'organe de liaison se trouve retenue dans le logement, la partie fixe étant une douille intérieure, la partie mobile étant une douille extérieure, les deux douilles étant concentriques, se caractérise en ce que le moyen de rappel est un ressort à spires disposé autour de la douille extérieure.

Après la rupture de l'organe de liaison, celui-ci se divise en au moins deux portions d'organe de liaison. Dans le cas où l'organe de liaison est un boulon, ces portions sont la tête de la vis d'une part et d'autre part l'extrémité libre de la tige de la vis, qui porte un écrou de serrage. Chaque portion d'organe de liaison n'est pas projetée dans l'environnement mais reste retenue dans un logement, proche de la position qu'elle occupait avant rupture.

Selon un autre aspect de l'invention, le système découpleur est équipé d'au moins un dispositif de retenue conforme à l'invention.

On précise que dans l'exposé qui va suivre, le dispositif de retenue conforme à l'invention sera présenté dans une situation où il est associé à un système découpleur, ledit système découpleur équipant un arbre de soufflante dans un turboréacteur. Mais l'invention n'est pas limitée à une telle situation, et peut être utilisée dans d'autre configurations d'assemblage de pièces.

### BRÈVE DESCRIPTION DES DESSINS

L'invention sera mieux comprise à la lecture de la description détaillée qui va suivre d'un mode de réalisation préféré de l'invention, fourni à titre d'exemple illustratif, mais non limitatif, en référence aux dessins annexés dans lesquels:
- la figure 1 est une vue en coupe longitudinale d'une portion de turboréacteur équipé d'un système découpleur, illustrant un environnement général dans lequel le dispositif de retenue de l'invention est mis en oeuvre ;
- la figure 2 est une vue agrandie de la figure 1, montrant la zone dans laquelle est installée le système découpleur, équipé du dispositif de retenue de l'invention, avant découplage ;
- la figure 3 est une vue analogue à celle de la figure 2, après découplage ;
- la figure 4 est une vue en coupe longitudinale montrant un dispositif de retenue en configuration de retenue d'une tête de boulon, avant rupture du boulon ;
- la figure 5 est une vue analogue à la figure 4, après rupture du boulon ;
- la figure 6 est une vue en coupe longitudinale montrant un dispositif de retenue en configuration de retenue d'une tête de boulon, et un autre dispositif de retenue en configuration de retenue d'une queue de boulon, avant rupture du boulon ;
- la figure 7 est une vue analogue à celle de la figure 6, après découplage.

### EXPOSÉ DÉTAILLÉ DE MODES DE RÉALISATION PARTICULIERS

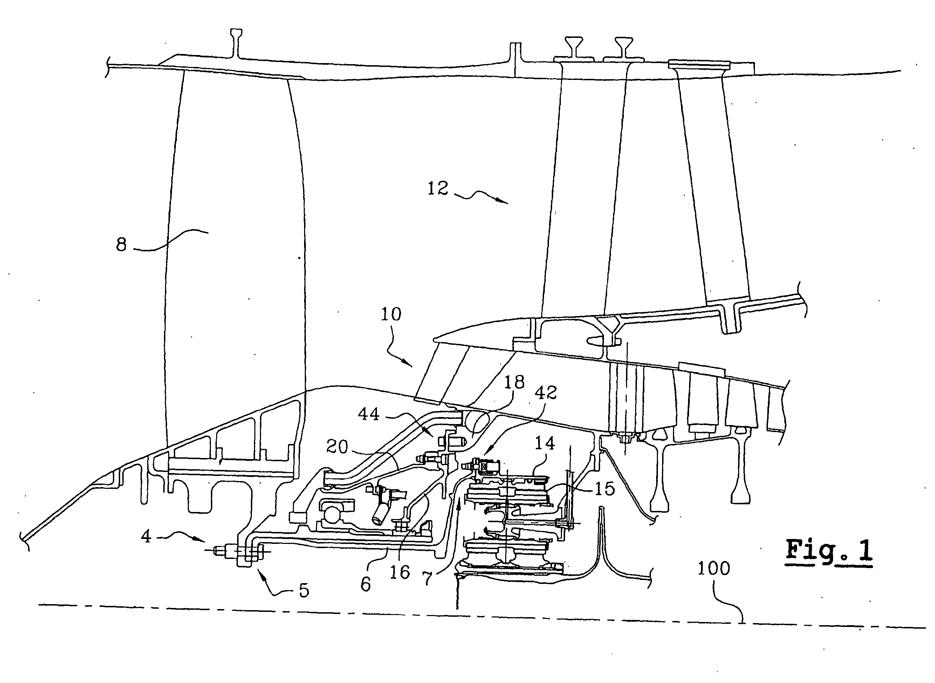

Sur la figure 1 est illustrée une partie de turboréacteur constituant un environnement potentiel pour le dispositif de l'invention.

Une soufflante 4 de turboréacteur d'axe 100 entraînée et supportée par un arbre tournant 6 est située à l'avant d'une ligne d'arbres à basse pression 2. La soufflante 6 est munie d'aubes 8 qui s'étendent devant l'entrée d'une veine interne 10 ou veine principale d'écoulement des gaz, et devant l'entrée d'une veine externe 12, entourant la veine interne 10 et qu'emprunte l'air de dilution des gaz.

L'arbre tournant 6 porte la soufflante 4 à son extrémité avant 5 et s'étend en arrière à partir de la soufflante 6.

L'arbre 6 est relié à son extrémité arrière 7 à une pièce périphérique 14 d'une structure en couronne 15. Ladite pièce périphérique 14 est mobile en translation axiale par rapport à la structure en couronne 15, au moyen de rouleaux 144 et de moyens de rappel 146.

Un carter 16 est fixé à une structure fixe 18 et à un support 20.

Si une aube de la soufflante 4 se rompt, un balourd se produit sur l'arbre 6, ce qui génère des charges cycliques et des vibrations, que l'arbre 6 et le carter 16 sont susceptibles de transmettre à la structure en couronne 15 et à la structure fixe 18.

Pour éviter une détérioration de la structure en couronne 15, de la structure fixe 18, et d'autres structures auxquelles elles sont reliées, deux systèmes découpleurs 42, 44 sont interposés, respectivement entre l'extrémité arrière de l'arbre 7 et la pièce périphérique 14 de la structure en couronne 15, et entre le carter 16 et le support 20.

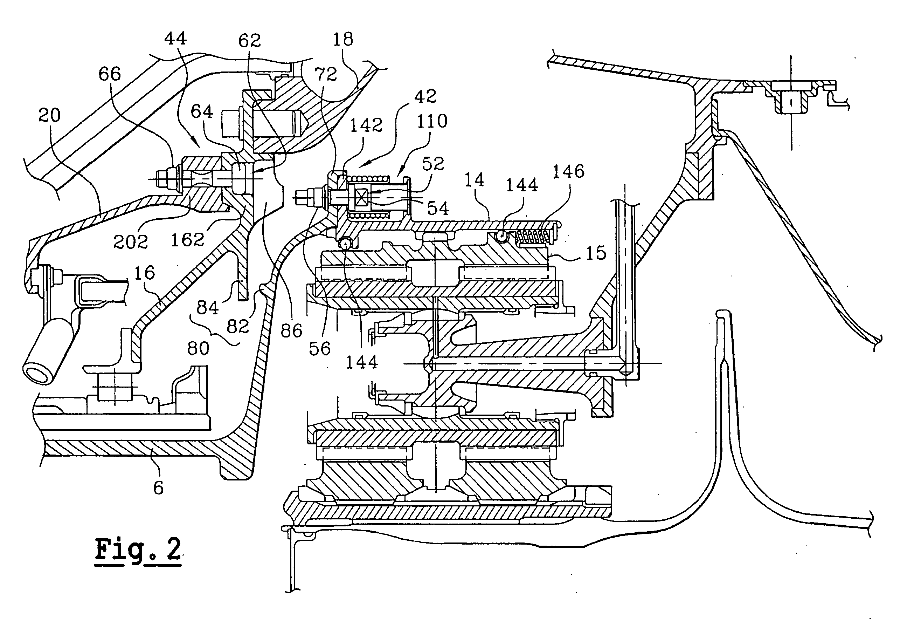

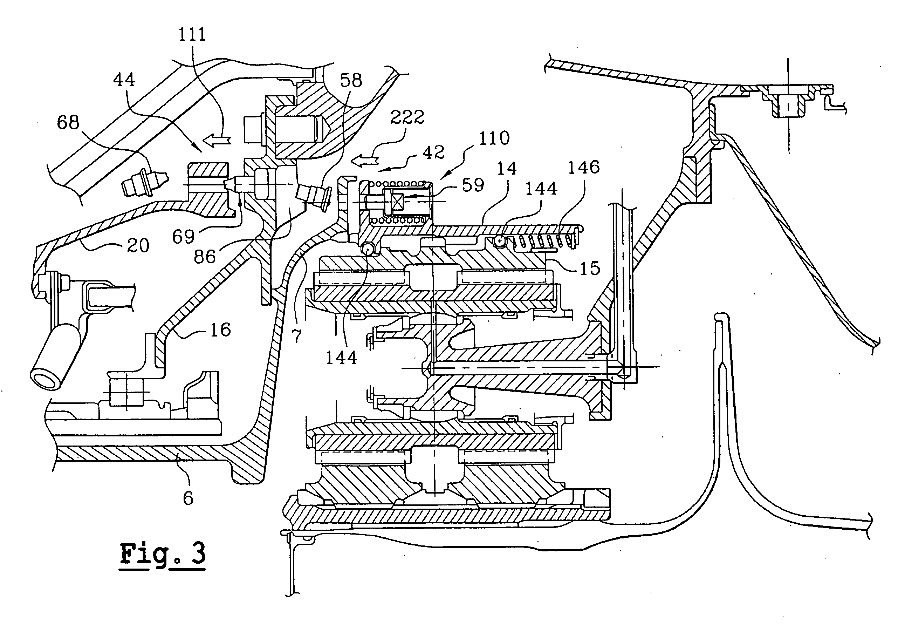

Les figures 2 et 3 sont respectivement des vues agrandies de la zone où interviennent ces deux systèmes découpleurs 42 et 44.

On va maintenant décrire brièvement ces deux systèmes découpleurs, qui sont par ailleurs connus en soi.

Sur les figures 2 et 3 sont représentés l'arbre 6, et son extrémité arrière 7, la structure en couronne 15, la pièce périphérique 14 de la structure en couronne 15 et ses moyens de translation axiale 144, 146, le carter 16, la structure fixe 18, et le support 20.

L'extrémité arrière 7 de l'arbre 6 présente une bride d'assemblage 72 et la partie périphérique de la pièce périphérique 14 de la structure en couronne 15 présente une bride d'assemblage 142. Les deux brides d'assemblage sont reliées l'une à l'autre par un ensemble d'organes de liaison 52 répartis sur la périphérie des deux brides d'assemblage 72, 142. Sur l'exemple illustré, lesdits organes de liaison 52 sont du type boulons, constitués chacun d'une vis d'assemblage 54 et d'un écrou de serrage 56. Avantageusement, les vis d'assemblage 54 sont du type fusible, c'est-à-dire présentant une zone de fragilité qui constitue une amorce de rupture. Le système découpleur 42 est ici constitué des organes de liaison 52 et des deux brides d'assemblage 72, 142 qui présentent chacune des alésages adaptés à la réception des organes de liaison 52.

Le carter 16 présente une zone d'assemblage 162 amincie et coudée, pour sa liaison avec l'extrémité 202 du support 20, ladite extrémité 202 étant conformée en bride d'assemblage. La bride d'assemblage 202 et la zone d'assemblage 162 sont reliées l'une à l'autre par un ensemble d'organes de liaison 62 répartis sur la périphérie de la bride d'assemblage 202 et sur une circonférence de la zone d'assemblage 162. Sur l'exemple illustré, lesdits organes de liaison 62 sont également du type boulons, constitués chacun d'une vis d'assemblage 64 et d'un écrou de serrage 66. Avantageusement, les vis d'assemblage 56 sont du type fusible, c'est-à-dire présentant une zone de fragilité qui constitue une amorce de rupture. Le système découpleur 44 est ici constitué des organes de liaison 62, de la bride d'assemblage 202 et de la zone d'assemblage 162 qui présentent chacune des alésages adaptés à la réception des organes de liaison 62.

Les deux découplages se produisent successivement. Ils sont illustrés aux figures 2 et 3, qui représentent respectivement la configuration d'ensemble, respectivement avant les découplages et après les découplages. La figure 3 illustre en outre la mise en oeuvre d'un dispositif de retenue conforme à l'invention, et les inconvénients engendrés par l'absence d'un tel dispositif de retenue.

Sous l'effet d'un balourd engendré par l'aube 8, les organes de liaison 62 du système découpleur 42 se rompent. Le premier découplage a eu lieu (flèche 111).

Par suite, l'arbre 6 se déplace vers l'avant. L'amplitude de son déplacement est limitée par des butées 80 constituées par des reliefs 82 de l'arbre 6 qui viennent heurter une paroi périphérique 84 du carter 16. Le déplacement de l'arbre 6 vers l'avant provoque la collision des extrémités des tiges de vis 54 portant les écrous 56 avec des encoches 86 du carter 16, ce qui provoque la rupture des organes de liaison 52 du système découpleur 42. Le deuxième découplage a eu lieu (flèche 222).

La figure 3 montre de quelle manière des portions 58 et 68 des organes de liaison 52, 62 se trouvent brusquement libérées par la rupture desdits organes de liaison 52, 62, et sont projetés dans l'environnement des deux systèmes découpleurs 42, 44. Ces portions 58, 68 sont ici constituées par une portion des tiges des vis 54, 64 portant respectivement les écrous 56, 66. Il apparaît à l'observation de la figure 3 que la projection de ces portions 58, 68 dans l'environnement engendre un risque de détérioration des pièces qu'elles atteignent et/ou un disfonctionnement des pièces dans lesquelles elles peuvent aller se coincer.

La figure 3 montre également que l'autre portion 69 issue de la rupture de l'organe de liaison 62 reste en place du fait de la géométrie particulière de la zone d'assemblage 162, qui est avantageusement amincie et coudée.

La figure 3 illustre enfin de quelle manière un dispositif 110 conforme à l'invention est apte à retenir la deuxième portion 59 de l'organe de liaison 52 du système découpleur 42 agissant entre l'arbre 6 et la pièce périphérique 14 de la structure en couronne 15. La présence de ce dispositif 110 est particulièrement avantageuse lorsque la géométrie des pièces découplées, ici la périphérie de la structure en couronne 14 et l'extrémité arrière 7 de l'arbre 6, n'est pas conçue pour retenir les portions d'organes de liaison qui sont libérées par la rupture desdits organes de liaison.

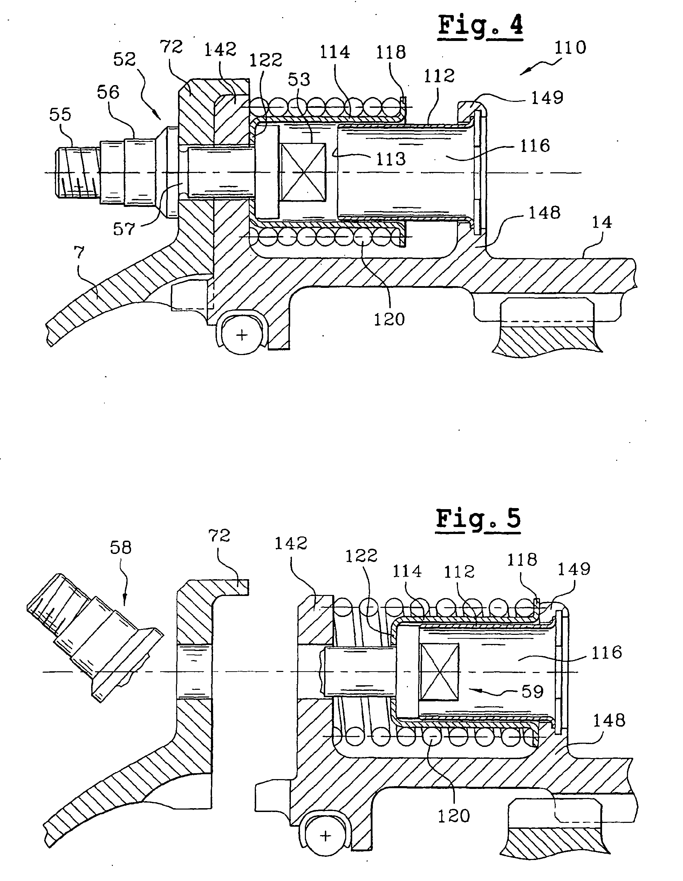

On va maintenant décrire la structure et le fonctionnement d'un dispositif 110 conforme à l'invention en référence aux figures 4 et 5.

Les figures 4 et 5 représentent en vue agrandie la liaison entre la pièce périphérique 14 de la structure en couronne 15 et l'extrémité arrière 7 de l'arbre 6, respectivement avant et après le second découplage. La liaison est réalisée entre la bride d'assemblage 72 de l'extrémité 7 de l'arbre 6 et la bride d'assemblage 142 de la pièce périphérique 14. Cette liaison est réalisée au moyen d'organes de liaison 52 d'axes 50, constitués chacun d'une vis d'assemblage 54 et d'un écrou de serrage 56. La vis 54 présente une tête de vis 53 et une tige de vis 55. Lorsque la vis d'assemblage 54 est du type fusible, elle présente une zone de fragilité 57 pour amorcer la rupture.

Le dispositif 110 illustré à la figure 4 est destiné à retenir la portion d'organe de liaison 52 constitué par la tête 53 de la vis 54 et par une partie adjacente de la tige 55 de ladite vis 54. Il est donc disposé à proximité immédiate de la bride d'assemblage qui se trouve du côté de la tête 53 de la vis 54, ici la bride d'assemblage 142 de la pièce périphérique 14 de la structure en couronne 15.

Le dispositif 110 comprend une partie fixe 112, solidaire d'une paroi transverse projetée 148 de la pièce périphérique 14 de la structure en couronne 15. La partie fixe 112 est une douille intérieure disposée dans le prolongement de l'organe de liaison 52, selon l'axe 50 de celui-ci.

Le dispositif 110 comprend une partie mobile 114, apte à coulisser par rapport à la partie fixe 112. La partie mobile 114 est une douille extérieure disposée dans le prolongement de l'organe de liaison 52, selon l'axe 50 de celui-ci. La douille extérieure 114 entoure la douille intérieure 112, les deux douilles étant concentriques.

La douille extérieure 114 présente vers celle de ses extrémités la plus proche de la bride 142 un rebord rentrant 122. Ce rebord rentrant 122 vient s'interposer entre ladite bride 142 et la tête 53 de la vis 54, et forme un moyen de traction 122 pour ladite tête 53 de vis 54, qu'elle entraîne avec elle lorsqu'elle s'éloigne de ladite bride 142 lors de son coulissement axial.

La douille extérieure 114 présente encore vers celle de ses extrémités la plus éloignée de la bride 142 un rebord sortant 118. Ce rebord sortant 118 forme une collerette périphérique 118 de ladite douille extérieure 114.

La douille intérieure fixe 112 et la douille extérieure mobile 114 définissent un logement 116 du dispositif 110. Ledit logement 116 est orienté axialement selon l'axe 50 de l'organe de liaison 52.

Le dispositif 110 comprend un moyen de rappel 120, qui est ici un ressort à spires, disposé autour de la douille extérieure mobile 114. Ledit moyen de rappel 120 s'appuie d'un côté sur une butée mobile 118 solidaire de la partie mobile 114, avantageusement constituée par le rebord sortant 118 de ladite douille extérieure 114. Il s'appuie de l'autre côté sur la bride d'assemblage 142.

Ledit moyen de rappel 120 est comprimé lors de l'opération d'assemblage de l'extrémité 7 de l'arbre 6 et de la pièce périphérique 14 de la structure en couronne 15 par leurs brides d'assemblage respectives 72 et 142, c'est-à-dire qu'il est comprimé lors du serrage des boulons 52.

Ledit moyen de rappel 120 est détendu lors du découplage, ce qui provoque le coulissement de la douille extérieure mobile 114 par rapport à la douille intérieure fixe 112, la douille extérieure s'éloignant de la bride 142. Il s'ensuit une diminution du volume du logement 116.

Lorsque le découplage se produit, l'organe de liaison 52 se rompt, ce qui libère les portions 58, 59 dudit organe de liaison 52. La figure 5 illustre la portion 58 de l'organe de liaison 52 qui est libérée dans l'environnement et la portion 59 dudit organe de liaison 52 qui se trouve retenue dans le logement 116.

En même temps, le moyen de rappel 120, qui était comprimé par le serrage de l'organe de liaison 52 se détend brutalement, et entraîne avec lui la douille extérieure mobile 114 qui coulisse axialement le long de la douille intérieure fixe 112. La douille extérieure mobile 114 entraîne avec elle la portion 59 de l'organe de liaison 52 au moyen du moyen de traction 122. La portion 59 de l'organe de liaison 52 se trouve alors immobilisée entre un élément immobilisateur de la partie mobile 114 et un élément immobilisateur de la partie fixe 112. Avantageusement, l'élément immobilisateur de la partie mobile 114 est ledit moyen de traction 122, et l'élément immobilisateur de la partie fixe 112 est une butée intérieure 113 de la douille intérieure fixe 112. De manière encore plus avantageuse, ladite butée intérieure 113 est constituée par la section annulaire d'extrémité de ladite douille intérieure 112 se trouvant du côté le plus proche de la bride d'assemblage 142.

De préférence, une butée fixe 149, solidaire de la partie fixe 112 est prévue pour limiter le coulissement axial de la partie mobile 114. Cette butée fixe peut être une collerette périphérique extérieure 149 de la douille intérieure. Elle peut être avantageusement constituée par la paroi transverse projetée 148 de la pièce périphérique 14 de la structure en couronne 15, paroi sur laquelle la partie fixe 112 est fixée par son extrémité la plus éloignée de la bride d'assemblage 142.

Cette fixation de ladite partie fixe 112 sur ladite paroi transverse 148 peut être réalisée par encastrement ou au moyen d'un circlips ou par tout autre moyen équivalent.

Avantageusement, les dimensions des douilles et des butées sont adaptées aux dimensions de l'organe de liaison que le dispositif 110 est destiné à retenir.

Le dispositif qui vient d'être décrit peut équiper un système découpleur d'un côté des organes de liaison, par exemple du côté des têtes de vis, comme illustré aux figures 4 et 5, mais il peut aussi l'équiper de l'autre côté des organes de liaison, ou même des deux côtés des organes de liaison. Il est particulièrement adapté pour équiper des systèmes découpleurs en traction.

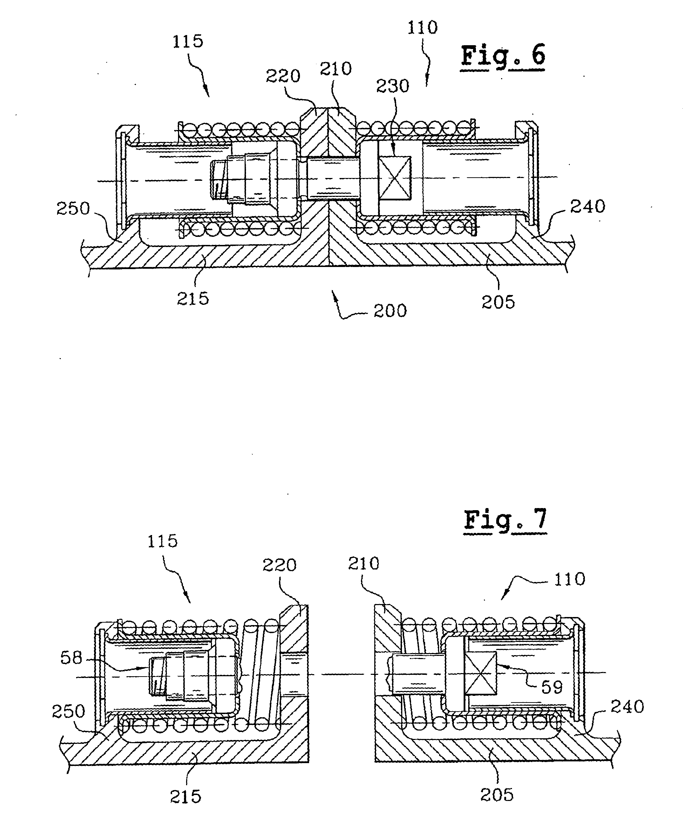

Sur les figures 6 et 7 sont représentés de manière générale des dispositifs 110 conformes à l'invention, équipant un système découpleur 200, de part et d'autre des organes de liaison, respectivement avant découplage et après découplage.

Le système découpleur 200 comprend une première bride d'assemblage 210 d'une première pièce assemblée 205 et une deuxième bride d'assemblage 220 d'une deuxième pièce assemblée 215, qui sont assemblées l'une à l'autre par un ensemble d'organes de liaison 230 répartis radialement, comme des boulons de serrage.

Une première paroi transverse 240 s'étend sensiblement parallèlement à la première bride d'assemblage 210 et une deuxième paroi transverse 250 s'étend sensiblement parallèlement à la deuxième bride d'assemblage 220.

Le système découpleur 200 est équipé d'un premier dispositif de retenue 110 et d'un deuxième dispositif de retenue 115, installés respectivement entre la première bride d'assemblage 210 et la première paroi transverse 240, et entre la deuxième bride d'assemblage 220 et la deuxième paroi transverse 250.

Sur la partie droite des figures 6 et 7 est représenté le premier dispositif 110 retenant une tête de boulon 59. Ce dispositif de retenue 110 est en tout point analogue à celui qui a été décrit en référence aux figures 4 et 5.

Sur la partie gauche des figures 6 et 7 est représenté le deuxième dispositif 115 retenant une tête de boulon 59. Ce dispositif de retenue 115 est en tous point analogue au premier dispositif de retenue 110, aux dimensions éventuelles près, qui sont cette fois adaptées, non pas à la tête de la vis, mais à l'écrou vissé sur la tige de la vis.

Il est bien sûr à la portée de l'homme du métier d'adapter aisément ce dispositif à d'autres organes de liaison, comme par exemple des rivets d'assemblage, sans pour cela sortir du cadre de la présente invention tel que défini par les revendications.

Le dispositif de retenue conforme à l'invention vient d'être décrit dans un contexte lié à un système découpleur à vis en traction, mis en oeuvre dans l'environnement d'un arbre de soufflante dans un turboréacteur. Il peut bien entendu être appliqué à tout autre système découpleur, mis en oeuvre dans tout environnement présentant des conditions de fonctionnement analogues, sans pour cela sortir du cadre de la présente invention.

## Revendications

1. Dispositif de retenue (110) destiné dans un assemblage de pièces au moyen d'un organe de liaison (52), à retenir une portion (59) de l'organe de liaison (52), libérée lors de la rupture dudit organe de liaison (52), comprenant :
- une partie fixe (112), destinée à être fixée sur l'une des pièces assemblées, du côté où est libérée la portion (59) de l'organe de liaison (52),
- une partie mobile (114) apte à coulisser par rapport à la partie fixe (112),
- un logement (116) pour ladite portion (59) de l'organe de liaison (52), défini à l'intérieur de la partie fixe (112) et de la partie mobile (114),
- un moyen de rappel (120), comprimé lors de l'opération d'assemblage des pièces,
dans lequel le moyen de rappel (120) est détendu lors de la rupture de l'organe de liaison (52), ce qui provoque le coulissement de la partie mobile (114) par rapport à la partie fixe (112), de telle manière que ladite portion (59) de l'organe de liaison (52) se trouve retenue dans le logement (116),
la partie fixe (112) étant une douille intérieure, la partie mobile (114) étant une douille extérieure, les deux douilles étant concentriques, **caractérisé en ce que** le moyen de rappel (120) est un ressort à spires disposé autour de la douille extérieure (114).

2. Dispositif (110) selon la revendication 1, **caractérisé en ce que** le moyen de rappel (120) est comprimé lors de l'opération d'assemblage, entre l'une des pièces assemblées (14) et une butée mobile (118) solidaire de la partie mobile (114) .

3. Dispositif (110) selon la revendication 2, **caractérisé en ce que** ladite butée mobile (118) solidaire de la partie mobile (114) est une collerette de ladite partie mobile (114).

4. Dispositif (110) selon l'une quelconque des revendications 1 à 3, **caractérisé en ce qu'**il comprend en outre une butée fixe (149) pour limiter le coulissement de la partie mobile (114).

5. Dispositif (110) selon l'une quelconque des revendications 1 à 4, **caractérisé en ce que** la partie mobile (114) comprend un moyen de traction (122) apte à entraîner ladite portion (59) de l'organe de liaison (52), lors du coulissement de ladite partie mobile (114).

6. Dispositif (110) selon la revendication 5, **caractérisé en ce que** ledit moyen de traction (122) est un rebord rentrant de la partie mobile (114).

7. Dispositif (110) de retenue selon l'une quelconque des revendications 1 à 6, **caractérisé en ce que** lorsque le coulissement de la partie mobile (114) par rapport à la partie fixe (112) arrive en fin de course, la portion (59) de l'organe de liaison (52) se trouve immobilisée dans le logement (116) entre un élément immobilisateur de la partie fixe (112) et un élément immobilisateur de la partie mobile (114).

8. Dispositif (110) selon la revendication 7, **caractérisé en ce que** l'élément immobilisateur de la partie fixe (112) est une section d'extrémité (113) de la partie fixe (112).

9. Dispositif (110) selon la revendication 7 ou 8 et la revendication 5 ou 6, **caractérisé en ce que** l'élément immobilisateur de la partie mobile (114) est confondu avec le moyen de traction (122).

10. Dispositif (110) selon l'une quelconque des revendications 1 à 9, **caractérisé en ce qu'**il est adapté à la retenue d'une portion (59) de l'organe de liaison (52) ayant un axe longitudinal (50), et **en ce que** le coulissement de la partie mobile (114) par rapport à la partie fixe (118) se fait dans la direction dudit axe longitudinal (50).

11. Dispositif (110) selon la revendication 10, **caractérisé en ce qu'**il est adapté à la retenue d'une tête (53) de vis (52), ladite vis (52) ayant été rompue.

12. Dispositif (110) selon la revendication 10, **caractérisé en ce qu'**il est adapté à la retenue d'une extrémité de tige (55) de vis (52) portant un écrou (56), ladite vis (52) ayant été rompue.

13. Système découpleur (200), notamment système découpleur en traction, **caractérisé en ce qu'**il est équipé d'au moins un dispositif (110) selon l'une quelconque des revendications 1 à 12.

## Claims

1. A retaining device (110) designed in an assembly of parts by a connection device (52) to retain a portion (59) of the part connection device (52), said portion (59) of the connection device (52) being released when said connection device (52) fails, comprising:
- a fixed part (112) for fixing to one of the assembled parts from the side where the portion (59) of the connection device (52) is released,
- a mobile part (114) capable of sliding with respect to the fixed part (112) ,
- a housing (116) for said portion (59) of the connection device (52) formed inside the fixed part (112) and the mobile part (114),
- a return means (120), compressed during the part assembly operation, and in that the return means (120) is relaxed when the connection device (52) fails, which causes sliding of the mobile part (114) with respect to the fixed part (112), such that said portion (59) of the connection device (52) is retained in the housing (116), the fixed portion (112) being an internal bushing, the mobile portion (114) being an external bushing, the two bushings being concentric, **characterized in that** the return means (120) is a coil spring arranged around the external bushing (114).

2. A device (110) according to claim 1, **characterized in that** the return means (120) is compressed between one of the assembled parts (14) and a mobile stop (118) fixed to the mobile part (114), during the assembly operation.

3. A device (110) according to claim 2, **characterized in that** said mobile stop (118) fixed to the mobile part (114) is a collar of said mobile part (114).

4. A device (110) according to any one of claims 1 to 3, **characterized in that** it also comprises a fixed stop (149) to limit sliding of the mobile part (114).

5. A device (110) according to any one of claims 1 to 4, **characterized in that** the mobile part (114) comprises a tension means (122) capable of carrying said portion (59) of the connection device (52) with it, when said mobile part (114) slides.

6. A device (110) according to claim 5, **characterized in that** said tension means (122) is a reentrant rim of the mobile part (114).

7. A retaining device (110) according to any one of claims 1 to 6, **characterized in that** when the mobile part (114) stops sliding with respect to the fixed part (112), the portion (59) of the connection device (52) is retained in the housing (116) between an immobilizing element of the fixed part (112) and an immobilizing element of the mobile part (114).

8. A device (110) according to claim 7, **characterized in that** an end segment (113) of the fixed part (112) acts as the immobilizing element of the fixed part (112).

9. A device (110) according to claim 7 or 8 and claim 5 or 6, **characterized in that** the tension means (122) acts as the immobilizing element of the mobile part (114).

10. A device (110) according to any one of claims 1 to 9, **characterized in that** it is designed to retain a portion (59) of a connection device (52) with a longitudinal axis (50), and **in that** the mobile part (114) slides along the longitudinal axis (50), with respect to the fixed part (118).

11. A device (110) according to claim 10, **characterized in that** it is designed to retain a head (53) of a bolt (52), after said bolt (52) has broken.

12. A device (110) according to claim 10, **characterized in that** it is designed to retain the end of the shank (55) of a bolt (52) fitted with a nut (56), after said bolt (52) has broken.

13. A decoupling system (200), especially a tension bolt decoupling system, **characterized in that** it is fitted with at least a device (110) according to any of claims 1 to 12.

## Patentansprüche

1. Haltevorrichtung (110), die dazu vorgesehen ist, bei einem Zusammenbau von Elementen mittels eines Verbindungsorgans (52) einen Abschnitt (59) des Verbindungsorgans (52), der sich bei einem Bruch dieses Verbindungsorgans (52) gelöst hat, festzuhalten, und die aufweist:
- ein feststehendes Teil (112), das dazu vorgesehen ist, an einem der zusammengefügten Elemente befestigt zu werden, und zwar an der Seite, wo der Abschnitt (59) des Verbindungsorgans (52) gelöst ist,
- ein bewegbares Teil (114), das geeignet ist, dem feststehenden Teil (112) gegenüber zu gleiten,
- eine Aufnahme (116) für diesen Abschnitt (59) des Verbindungsorgans (52), die im Inneren des feststehenden Teils (112) und des bewegbaren Teils (114) gebildet ist,
- ein Rückstellmittel (120), das beim Vorgang des Zusammenfügens der Elemente zusammengedrückt wird,
wobei das Rückstellmittel (120) bei dem Bruch des Verbindungsorgans (52) entspannt wird, was das Gleiten des bewegbaren Teils (114) gegenüber dem feststehenden Teil (112) bewirkt, so dass dieser Abschnitt (59) des Verbindungsorgans (52) in der Aufnahme (116) festgehalten wird, wobei das feststehende Teil (112) eine innere Hülse ist, wobei das bewegbare Teil (114) eine äußere Hülse ist, wobei die beiden Hülsen konzentrisch angeordnet sind,
**dadurch gekennzeichnet,**
**dass** das Rückstellmittel (120) eine Spiralfeder ist, die um die äußere Hülse (114) herum angeordnet ist.

2. Vorrichtung (110) nach Anspruch 1,
**dadurch gekennzeichnet,**
**dass** das Rückstellmittel (120) beim Vorgang des Zusammenfügens zwischen einem der zusammengesetzten Elemente (14) und einem bewegbaren Anschlag (118), der mit dem bewegbaren Teil (114) fest verbunden ist, zusammengedrückt wird.

3. Vorrichtung (110) nach Anspruch 2,
**dadurch gekennzeichnet,**
**dass** dieser bewegbare Anschlag (118), der mit dem bewegbaren Teil (114) fest verbunden ist, ein Rand dieses bewegbaren Teils (114) ist.

4. Vorrichtung (110) nach einem der Ansprüche 1 bis 3,
**dadurch gekennzeichnet,**
**dass** sie ferner einen feststehenden Anschlag (149) aufweist, um die Gleitbewegung des bewegbaren Teils (114) zu begrenzen.

5. Vorrichtung (110) nach einem der Ansprüche 1 bis 4,
**dadurch gekennzeichnet,**
**dass** das bewegbare Teil (114) ein Zugmittel (122) umfasst, das geeignet ist, den Abschnitt (59) des Verbindungsorgans (52) während der Gleitbewegung dieses bewegbaren Teils (114) mitzunehmen.

6. Vorrichtung (110) nach Anspruch 5,
**dadurch gekennzeichnet,**
**dass** dieses Zugmittel (122) eine Rücksprungkante des bewegbaren Teils (114) ist.

7. Vorrichtung (110) nach einem der Ansprüche 1 bis 6,
**dadurch gekennzeichnet,**
**dass** der Abschnitt (59) des Verbindmgsorgans (52) in der Aufnahme (116) zwischen einem Arretierelement des feststehenden Teils (112) und einem Arretierelement des bewegbaren Teils (114) arretiert wird, wenn die Gleitbewegung dieses bewegbaren Teils (114) gegenüber dem feststehenden Teil (112) beim Hubende endet.

8. Vorrichtung (110) nach Anspruch 7,
**dadurch gekennzeichnet,**
**dass** das An-etierelement des feststehenden Teils (112) ein Endabschnitt (113) des feststehenden Teils (112) ist.

9. Vorrichtung (110) nach Anspruch 7 oder 8 und nach Anspruch 5 oder 6,
**dadurch gekennzeichnet,**
**dass** das Arretierelement des bewegbaren Teils (114) mit dem Zugmittel (122) zusammenfallt.

10. Vorrichtung (110) nach einem der Ansprüche 1 bis 9,
**dadurch gekennzeichnet,**
**dass** sie sich dazu eignet, einen Abschnitt (59) des Verbindungsorgans (52) mit einer Längsachse (50) festzuhalten, und dass die Gleitbewegung des bewegbaren Teils (114) gegenüber dem feststehenden Teil (112) in der Richtung dieser Längsachse (50) erfolgt.

11. Vorrichtung (110) nach Anspruch 10,
**dadurch gekennzeichnet,**
**dass** sie sich dazu eignet, einen Kopf (53) einer Schraube (52) festzuhalten, wenn diese Schraube (52) gebrochen ist.

12. Vorrichtung (110) nach Anspruch 10,
**dadurch gekennzeichnet,**
**dass** sie sich dazu eignet, ein Schaftende (55) einer Schraube (52), auf dem eine Mutter (56) sitzt, festzuhalten, wenn diese Schraube (52) gebrochen ist.

13. Entkupplungssystem (200), insbesondere Zug-Entkupplungssystem,
**dadurch gekennzeichnet,**
**dass** es mit mindestens einer Vorrichtung (110) nach einem der Ansprüche 1 bis 12 ausgerüstet ist.
